# EUROPÄISCHE PATENTSCHRIFT

(11) **EP 0 489 290 B1**
(45) Veröffentlichungstag und Bekanntmachung des Hinweises auf die Patenterteilung: **05.10.1994**
(21) Anmeldenummer: 91119495.9
(22) Anmeldetag: 15.11.1991
(51) Int. Cl.: B26B 11/00, B26B 27/00, C03B 33/12

(54) **Universalhandschneidgerät**
Universal cutting handtool
Outil de coupe à la main universel

(30) Priorität: 03.12.1990 DE 9016397 U
(43) Veröffentlichungstag der Anmeldung: 10.06.1992
(73) Patentinhaber: Weschenfelder, geb. Klotz, Sonja, D-76694 Forst (DE)
(72) Erfinder: Weschenfelder, Ralf, W-7529 Forst (DE)
(74) Vertreter: Zipse + Habersack

(56) Entgegenhaltungen:
- BE-A- 409 666
- DE-A- 3 300 730
- DE-A- 3 617 944
- DE-C- 212 751
- DE-U- 9 003 291
- FR-A- 740 534
- US-A- 4 028 802

## Beschreibung

Die Erfindung betrifft ein Universalhandschneidgerät, bestehend aus einem Handgriff mit eingesetztem Klappmesser, Glasschneider und ggf. Rollmesser.

In dem DE-U 90 03 291.8 ist ein Universalhandschneidgerät der eingangs genannten Art beschrieben, das aus einem Griff besteht, in dessen hinterem Teil ein ausklappbares Messer angeordnet ist und in dessen mittlerem Teil sich eine Schärfevorrichtung für Messer und Scheren befindet und an dessen vorderem Ende ein Glasschneider angebracht ist, der aus einem kleinen, kreisrunden Teller mit einem Schaft besteht, der in eine Öffnung am vorderen, spitzen Ende des Griffes eingesetzt und durch eine Schraube festlegbar ist.

Obwohl mit dem vorbekannten Universalhandschneidgerät die verschiedensten Schneidvorgänge durchgeführt werden können, ist es jedoch damit nur schwer möglich, bogen- oder kreisförmige Glasschnitte durchzuführen. Außerdem ist es nur schwer möglich, mit dem eingesetzten Klappmesser einwandfreie Schnitte von Bodenbelägen, beispielsweise Teppichen, durchzuführen.

Der vorliegenden Erfindung liegt die Aufgabe zugrunde, ein Universalhandschneidgerät der eingangs genannten Art vorzuschlagen, mit dem weitere wesentliche Schneidvorgänge der verschiedensten Art mit einem Gerät durchgeführt werden können.

Zur Lösung der gestellten Aufgabe wird ein Universalhandschneidgerät, bestehend aus einem Handgriff mit eingesetztem Klappmesser, Glasschneider und Rollmesser vorgeschlagen, welches dadurch gekennzeichnet ist, daß im Handgriff mindestens eine längsverlaufende Führungsnut angeordnet ist, in welcher ein erster Schlitten mit einem zur Ausführung eines bogen- oder kreisförmigen Schnittes mit dem Glasschneider drehbar angesetztem Gummisauger und ein zweiter Schlitten verstell- und festlegbar angeordnet sind, wobei an dem zweiten Schlitten über einen schräg nach unten verlaufenden Steg ein Gleitschuh angeordnet ist, in dem eine trapezförmige Schneidklinge auswechselbar angeordnet ist, und daß der Glasschneider auf einem im Handgriff verstell- und/oder verdrehbaren Träger befestigt ist.

Mit dem Universalhandschneidgerät gemäß der Erfindung wird der wesentliche Vorteil erreicht, daß einerseits durch Festlegung des Gummisaugers auf der Scheibe und Drehung des Handgriffes bei entsprechend eingesetztem Glasschneider ein kreisbogenförmiger Glasschnitt erreicht werden kann. Andererseits wird durch den am zweiten Schlitten befestigten Gleitschuh mit der eingesetzten, trapezförmigen Schneidklinge ein bequemes Schneiden von Bodenbelägen, insbesondere Teppichen, ermöglicht.

In den Unteransprüchen sind wertvolle Bereicherungen des Universalhandschneidgerätes gemäß der Erfindung angegeben.

Gemäß Anspruch 2 sind in den beiden Seitenwänden des Handgriffes je eine rechteck- oder trapezförmige, längsverlaufende Nut angeordnet, in die je ein U-förmiger Schlitten für den Gummisauger und den Gleitschuh gleitend eingreifen, wobei an der Unterseite der Schlitten Schrauben zum Festlegen derselben am Handgriff angeordnet sind.

Gemäß Anspruch 3 sind in dem zweiten Schlitten, dem schräg nach unten verlaufenden Steg und dem an der Unterseite angebrachten Schuh schlitz- bzw. nutenartige Öffnungen bzw. eine Aussparung zum Einsetzen der trapezförmigen Schneidklinge vorgesehen, die durch eine Schraubenvorrichtung darin festlegbar ist.

Gemäß Anspruch 4 sind in der einen Stirnseite des Handgriffes eine schräg nach vorne gerichtete Aussparung und im vorderen Bereich des Handgriffes eine nach unten gerichtete, Aussparung angeordnet, in die ein entsprechend geformter, stabförmiger Träger, an dessen Spitze sich der Glasschneider befindet, entsprechend der Benutzungsart verdreht einsteckbar ist. Zur Festlegung des Trägers in den Aussparungen sind in darin mehrere, vorzugsweise zwei, Einstellrippen vorgesehen, die in entsprechende Vertiefungen im Träger eingreifen und ihn so nach dem Einsetzen festlegen.

Schließlich kann in die im Handgriff vorgesehenen Führungsnuten auch ein dritter Schlitten eingesteckt und festgelegt werden, an dessen Unterseite eine Vorrichtung für einen Ovalschnitt mit dem Glasschneider angeordnet ist.

Anhand der Zeichnung soll am Beispiel einer bevorzugten Ausführungsform das Universalhandschneidgerät gemäß der Erfindung näher erläutert werden.

In der Zeichnung zeigt
- Fig. 1: eine Seitenansicht des Universalhandschneidgerätes gemäß der Erfindung und
- Fig. 2: eine Draufsicht auf das Universalhandschneidgerät mäß der Erfindung von unten.
- Fig. 3: zeigt einen Querschnitt der Schlitten.

Wie sich aus den Figuren der Zeichnung ergibt, besteht das Universalhandschneidgerät gemäß der Erfindung aus einem aus zwei Schalen 1, 2 zusammengesetzten Handgriff 3, in welchem am vorderen, oberen Ende ein Klappmesser 4 eingesetzt ist. An der Hinterseite ist ein Rollmesser 5 in eine entsprechende Öffnung eingesteckt.

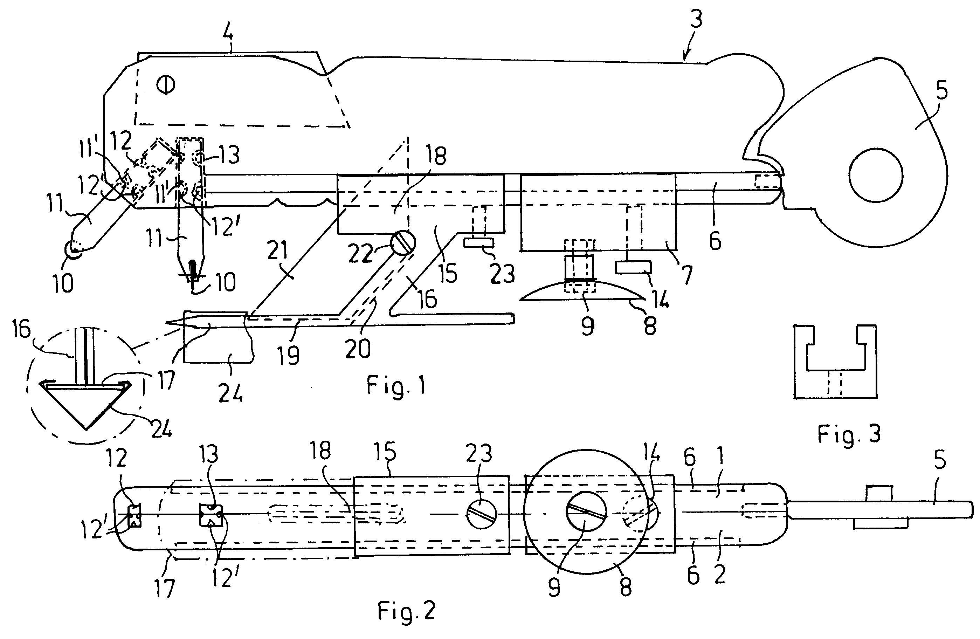

Der Handgriff 3 weist in den Seitenwänden rechteck- oder trapezförmige, längsverlaufende Nuten 6 auf, in die je ein U-förmiger Schlitten (Fig. 3) gleit- und verschiebbar eingreift.

In die Nuten 6 ist ein erster Schlitten 7 eingesetzt, in welchem an der Unterseite ein Gummisauger 8 drehbar gelagert ist. Der Gummisauger 8 ist mittels einer Schraube 9 an der Unterseite des Schlittens lose eingeschraubt, so daß dieser sich drehen und auch in einem gewissen Winkel gegenüber der Horizontalen geneigt werden kann.

Die beschriebene Anordnung des Gummisaugers arbeitet mit dem im vorderen Bereich des Handgriffes 3 eingesetzten Glasschneider zusammen.

Im Normalzustand ist der Glasschneider 10, der sich an der Spitze eines rechteckförmigen Stabes 11 als Träger befindet, in eine schräg nach vorne verlaufende Aussparung 12 im Handgriff 3 eingesetzt. Wenn das Universalhandschneidgerät gemäß der Erfindung als Kreisschneider benutzt werden soll, wird der Stab 11 aus der vorderen Aussparung 12 herausgezogen, um 90 Grad gedreht und in eine senkrecht nach unten verlaufende weitere Aussparung 13 eingesetzt. Zur Festlegung des Trägers in den Aussparungen sind in darin Erhöhungen oder Einstellrippen 12' vorgesehen, die beim Einsetzen des Trägers in seine entsprechende Aussparungen 11' eingreifen und ihn so in der Aussparung festlegen.

Der Gummisauger 8 wird dann auf die Glasfläche aufgedrückt und der Handgriff 3 kreisförmig unter Aufsetzen des Glasschneiders 10 auf der Glasfläche gedreht. Dabei kann in einfacher Weise ein kreisbogenförmiger Glasschnitt erzeugt werden. Die Festlegung des Schlittens 7 am Handgriff 3 erfolgt mittels einer Feststellschraube 14.

In die Nuten 6 ist ferner ein weiterer, U-förmiger Schlitten 15 gleitend und verstellbar eingesetzt, der einen schräg nach unten verlaufenden Steg 16 aufweist, an dessen Ende ein Gleitschuh 17 angeordnet ist. Der Schlitten 15 und der Gleitschuh 17 weisen je eine schlitzartige Öffnung 18, 19 auf, und der schräg nach unten verlaufende Steg besitzt eine nutenartige Aussparung 20. In die Öffnungen und die Aussparung ist eine trapezförmige Schneidklinge 21 eingesetzt, die mittels einer Schraube 22 festlegbar ist. Die dargestellte Schneidvorrichtung eignet sich insbesondere zum Schneiden von Bodenbelägen, insbesondere Teppichen, wobei durch den Gleitschuh 17 eine besonders gute Führung des Schneidmessers 21 erzielt wird. Die Festlegung des Schlittens 15 erfolgt durch eine Schraube 23.

Es ist selbstverständlich möglich, noch einen dritten, nicht dargestellten Schlitten vorzusehen, an dem eine Einrichtung zur Führung des Handgriffes 3 vorgesehen ist, die einen Ovalschnitt oder eine andere Kurvenform erzeugt. Der als Träger dienende Stab 11 des Glasschneiders 10 befindet sich dann ebenfalls in der Aussparung 13.

Es ist ferner möglich, wie bei 24 in Fig. 1 im Prinzip dargestellt, auf den Gleitschuh 17 eine an den Ecken abgebogene, dreieckförmige Leiste 24 aufzustecken, die eine Führung des Handgriffes im Winkel von 45 Grad zur Grundfläche ermöglicht. Dadurch ist ein leichtes Bearbeiten von Bodenbelägen, insbesondere Teppichen, an Ecken und Kanten möglich. Die kreisförmig umrahmte Darstellung zeigt einen Blick von vorne auf den Gleitschuh 17 mit der aufgesteckten Leiste 24.

## Patentansprüche

1. Universalhandschneidgerät, bestehend aus einem Handgriff mit eingesetztem Klappmesser, Glasschneider und Rollmesser **dadurch gekennzeichnet,** daß im Handgriff (3) mindestens eine längsverlaufende Führungsnut (6) angeordnet ist, in welcher ein erster Schlitten (7) mit einem zur Ausführung eines bogen- oder kreisförmigen Schnittes mit dem Glasschneider drehbar angesetztem Gummisauger (8) und ein zweiter Schlitten (15) verstell- und festlegbar angeordnet sind, wobei an dem zweiten Schlitten über einen schräg nach unten verlaufenden Steg (16) ein Gleitschuh (17) angeordnet ist, in dem eine trapezförmige Schneidklinge (21) auswechselbar angeordnet ist, und daß der Glasschneider (10) auf einem im Handgriff verstell- und/oder verdrehbaren Träger (11) befestigt ist.

2. Universalhandschneidgerät nach Anspruch 1, **dadurch gekennzeichnet**, daß in den beiden Seitenwänden des Handgriffes (3) je eine rechteck- oder trapezförmige, längsverlaufende Nut (6) angeordnet ist, in die je ein U-förmiger Schlitten (7, 15) für den Gummisauger (8) und den Gleitschuh (17) gleitend eingreifen, wobei an der Unterseite der Schlitten Schrauben (14, 23) zum Festlegen derselben am Handgriff angeordnet sind.

3. Universalhandschneidgerät nach Anspruch 1 und 2, **dadurch gekennzeichnet,** daß in dem zweiten Schlitten (15), dem schräg nach unten verlaufenden Steg (16) und dem an der Unterseite angebrachten Gleitschuh (17) schlitz- bzw. nutenartige Öffnungen (18, 19) bzw. eine Aussparung (20) zum Einsetzen der trapezförmigen Schneidklinge (21) vorgesehen sind, die durch eine Schraubenvorrichtung (22) darin festlegbar ist.

4. Universalhandschneidgerät nach Anspruch 1 bis 3, **dadurch gekennzeichnet,** daß in der einen Stirnseite des Handgriffes (3) eine schräg nach vorne gerichtete Aussparung (12) und im vorderen Bereich des Handgriffes (3) eine nach unten gerichtete, Aussparung (13) angeordnet sind, in die ein entsprechend geformter, stabförmiger Träger (11), an dessen Spitze sich der Glasschneider (10) befindet, entsprechend der Benutzungsart verdreht einsteckbar ist, wobei zur Festlegung des Trägers (11) in den Aussparungen in diesen mehrere, vorzugsweise zwei, Erhöhungen bzw. Einstellrippen (12') vorgesehen sind, die in entsprechende Vertiefungen im Träger (11) eingreifen.

5. Universalhandschneidgerät nach Anspruch 1 bis 4**, dadurch gekennzeichnet,** daß in die im Handgriff (3) vorgesehenen Führungsnuten (6) auch ein dritter Schlitten eingesteckt und festgelegt werden kann, an dessen Unterseite eine Vorrichtung für einen Ovalschnitt mit dem Glasschneider angeordnet ist.

6. Universalhandschneidgerät nach Anspruch 1 bis 5, **dadurch gekennzeichnet,** daß auf den Gleitschuh (17) eine an den Ecken abgebogene, dreieckförmige Leiste (24) aufgesteckt ist, die eine Führung des Handgriffes im Winkel von 45 Grad zur Grundfläche ermöglicht.

7. Universalhandschneidgerät nach Anspruch 1, **dadurch gekennzeichnet,** daß im Handgriff (3) eine Führungsnut (6) angeordnet ist.

8. Universalhandschneidgerät nach Anspruch 1, **dadurch gekennzeichnet,** daß im Handgriff (3) zwei Führungsnuten (6) angeordnet sind.

## Claims

1. Universal cutting handtool consisting of a handle with a folding knife, glass cutter and roller cutter fitted in it, characterised in that at least one guide slot (6) is arranged running lengthwise in the handle (3), in which slot a first carriage (7), with a rubber sucker (8) attached which may be rotated to make an arched or circular cut with the glass cutter, and a second carriage (15) are arranged in such a way that they may be adjusted and fixed, wherein a slide block (17) is fitted on the second carriage via a downwardly inclined crosspiece (16), in which slide block an interchangeable trapezoidal cutting blade (21) is fitted, and in that the glass cutter (10) is attached to a holder (11) which may be adjusted and rotated in the handle.

2. Universal cutting handtool according to claim 1, characterised in that in each of the side walls of the handle (3) a rectangular or trapezoidal groove (6), running lengthwise, is arranged, in which U-shaped carriages (7, 15) for the rubber sucker (8) and the slide block (17) respectively are slidably engaged, and wherein screws (14, 23) are arranged on the undersides of the carriages for securing the same to the handle.

3. Universal cutting handtool according to claims 1 and 2, characterised in that in the second carriage (15), in the downwardly inclined crosspiece (16) and in the slide block (17) attached to the underside, slot-like or grooved openings (18, 19) or a recess (20) for insertion of the trapezoidal cutting blade are provided, which is securable therein by means of a screw device (22).

4. Universal cutting handtool according to claims 1 to 3, characterised in that a forwardly inclined recess (12) is provided in one of the front sides of the handle (3) and a downwardly directed recess (13) is provided in the forward region of the handle, in which a correspondingly shaped rod-like holder (11), at the end of which the glass cutter (10) is positioned, is rotatably insertable according to the type of use, and wherein several, preferably two, raised parts or adjustment ribs (12') are provided, which engage in corresponding depressions in the holder (11).

5. Universal cutting handtool according to claims 1 to 4, characterised in that a third carriage can be inserted and secured in the guide slots (6) provided in the handle (3), on the underside of which carriage a device is arranged for cutting an oval shape with the glass cutter.

6. Universal cutting handtool according to claims 1 to 5, characterised in that a triangular-shaped protective strip (24), bent at the corners, is put on the slide block (17), which makes it possible to control the handle at an angle of 45 degrees to the floor surface.

7. Universal cutting handtool according to claim 1, characterised in that a guide slot (6) is arranged in the handle (3).

8. Universal cutting handtool according to claim 1, characterised in that two guide slots (6) are arranged in the handle (3).

## Revendications

1. Outil de coupe à la main universel, comprenant un manche sur ou dans lequel sont montés une lame repliable, un coupe-verre et un mesureur ou un couteau roulant, caractérisé en ce que le manche (3) possède au moins une rainure de guidage (6) longitudinale, dans lequel sont disposés réglables et blocables un premier coulisseau (7) sur lequel est montée rotative une ventouse (8) en caoutchouc pour l'exécution d'une coupe en arc ou circulaire par le coupe-verre, et un second coulisseau (15) sur lequel est disposé, par l'intermédiaire d'une entretoise (16) s'étendant obliquement vers le bas, un patin (17, dans lequel une lame de coupe (21) trapézoïdale est montée de manière à pouvoir être remplacée, et que le coupe-verre (10) est fixé sur un support (11) pouvant être réglé et/ou tourné dans le manche.

2. Outil de coupe à la main universel selon la revendication 1, caractérisé en ce que les deux parois latérales du manche (3) possèdent chacune une rainure longitudinale (6) de forme rectangulaire ou trapézoïdale, dans chacune desquelles sont engagés et peuvent glisser un coulisseau en U (7) pour la ventouse (8) et un coulisseau en U (15) pour le patin (17), le côté inférieur des coulisseaux portant des vis (14, 23) pour leur blocage sur le manche.

3. Outil de coupe à la main universel selon les revendications 1 et 2, caractérisé en ce que des ouvertures semblables à des fentes ou des rainures (18, 19) ou un évidement (20) pour la mise en place de la lame trapézoïdale (21) sont prévus dans le second coulisseau (15), l'entretoise (16) s'étendant obliquement vers le bas et le patin (17) agencé sur le côté inférieur, ouvertures ou évidement dans lesquels la lame trapézoïdale peut être fixée au moyen d'un dispositif à vis (22).

4. Outil de coupe à la main universel selon les revendications 1 à 3, caractérisé en ce qu'un évidement (12) dirigé obliquement vers l'avant est agencé dans un côté d'extrémité du manche (3) et un évidement (13) dirigé vers le bas est agencé dans la partie avant du manche (3), évidements dans lesquels peut être inséré, après une rotation éventuelle selon le mode d'utilisation, un support (11) de configuration correspondante et ayant la forme d'une tige portant à son bout le coupe-verre (10), les évidements contenant, pour la fixation du support (11), plusieurs, de préférence deux surélévations ou nervures de positionnement ou de réglage (12') qui pénètrent dans des creux complémentaires du support (11).

5. Outil de coupe à la main universel selon les revendications 1 à 4, caractérisé en ce qu'un troisième coulisseau peut être engagé et fixé dans les rainures de guidage (6) prévues dans le manche (3), coulisseau dont le côté inférieur porte un dispositif pour exécuter une coupe ovale par le coupe-verre.

6. Outil de coupe à la main universel selon les revendications 1 à 5, caractérisé en ce qu'une réglette (24) triangulaire, permettant un guidage du manche sous un angle de 45 degrés par rapport à la surface de support et recourbée aux angles, est enfilée sur le patin (17).

7. Outil de coupe à la main universel selon la revendication 1, caractérisé en ce qu'une rainure de guidage (6) est formée dans le manche (3).

8. Outil de coupe à la main universel selon la revendication 1, caractérisé en ce que deux rainures de guidage (6) sont formées dans le manche (3).
